# EUROPEAN PATENT SPECIFICATION

(11) **EP 4 284 585 B1**
(45) Date of publication and mention of the grant of the patent: **04.03.2026**
(21) Application number: 23744009.4
(22) Date of filing: 24.01.2023
(51) Int. Cl.: B23K 9/173, B23K 9/29, B23K 35/02

(54) **WELDING END ASSEMBLY FOR NON-ROUND WIRE**
SCHWEISSENDEANORDNUNG FÜR UNRUNDEN DRAHT
ENSEMBLE EXTRÉMITÉ À SOUDER POUR FIL NON ROND

(30) Priority: 24.01.2022 US 202263302168 P
(43) Date of publication of application: 06.12.2023
(73) Proprietor: ELCo Enterprises, Inc., Jackson, MI 49201 (US)
(72) Inventor: COOPER, Edward, L., Clarklake, MI 49234 (US)
(74) Representative: Dr. Solf & Zapf Patent- und Rechtsanwalts PartG mbB
(86) International application number: PCT/US2023/061125
(87) International publication number: WO 2023/141645

(56) References cited:
- CN-U- 208 322 878
- DE-B3- 10 322 116
- DE-U1- 29 905 592
- US-A1- 2007 062 922
- US-A1- 2012 298 629
- US-A1- 2015 136 748
- US-A1- 2021 107 085
- US-A1- 2021 107 085

## Description

This invention relates to metal fusion welding equipment and processes utilizing an electric arc and the use of a non-round filler wire or consumable electrode to provide additional metal for forming a weld bead and joint. More specifically, the invention relates to an end assembly for such systems, see claim 1.

### BACKGROUND AND SUMMARY OF THE INVENTION

The applicant is the developer of numerous innovations in the area of welding technologies, including; gas metal arc welding (GMAW), also known as metal inert gas (MIG) welding, metal active gas (MAG) welding, shielded metal arc welding (SMAW), gas tungsten arc welding (GTAW), flux cored arc welding (FCAW), submerged arc welding (SAW), electroslag welding (ESW), electric resistance welding (ERW), and other types and variations of such welding technologies. Among other areas of innovation, the applicants have discovered numerous improvements in the design, transport and equipment for consumable electrodes in the form of a filler or weld wire used in many of these processes. In systems of the above described type, filler or weld wire is fed through a welding torch to the weld arc area. The wire typically used in the past has a round cross-sectional shape. Applicants have discovered numerous advantages in the use of a non-round cross-section filler or weld wires such as those having an essentially elliptical cross-sectional profile, flattened or other non-round shapes for MIG welding and similar processes. Among other benefits, such weld wire configurations provide better electrical contact with the torch tip thereby conducting electric current to the workpiece through the weld wire with less resistance. Such advantages are described and claimed by U.S. Patent Nos. 8,878,098; and 9,440,304, and as described in the patent application published as US 2015/048056. Applicant has also applied non-round weld filler wire technology to welding processes not based on electrical resistance as a heat source, but instead rely on radiant energy beams such as from a laser source. DE 299 05 592 U1 discloses a shielding gas welding torch for melting flat wire electrodes. The welding torch comprises a profile tube. An inner tube is arranged in the profile tube forming a circular cooling channel between the profile tube and the inner tube. A contact tip, comprising an outer profile at its distal end facing the profile tube, is arranged in a respective aperture of the profile tube. The contact tip is held in place, especially for better thermal conductivity, via a nut and a clamping cone. US 2021/107085 A1 (describing the preamble of claim 1) shows an end assembly for a welding device, wherein the tip of the welding device comprises an opening for an electrode wire with a round sectional shape. The contact tip is screwed into an internal cavity of the diffuser body, wherein the external thread of the contract tip is arranged adjacent to the convex surface of the contact tip. Corresponding to the contact tip, the internal cavity of the diffuser body comprises at its inner end a concave surface and adjacent to the concave surface internal threads.

While the use of non-round electrode wire is known in the prior art, there is a continued need to provide welding and welding tip systems, especially adapted for the use of such wire. For example, one of the principal advantages of the use of non-round wire is the ability to provide a precise orientation between the major and minor axes of the wire cross-section relative to the weld bead, the weld joint structure, and the direction of advancement of the weld bead during welding processes. The present invention is related to a welding end assembly having features for providing a predetermined orientation of the wire cross-section during welding operations.

According to a first aspect of the present invention, an end assembly for a welding device for use with a consumable electrode having a non-round cross-sectional shape is defined in claim 1.

According to a second aspect of the present invention, a welding device for use with a consumable electrode having a non-round cross-sectional shape comprising an end assembly according to the first aspect of the present invention is defined in claim 2.

Further preferred embodiments of the first aspect of the present invention are defined in the dependent claims.

The appended drawings and description provide a description of these features.

### BRIEF DESCRIPTION OF THE DRAWINGS

Figure 1 is a pictorial schematic illustration of a welding gun utilizing the end assembly in accordance with the present invention.
Figure 2A is an illustration of forming a weld using conventional prior art round cross-section electrode wire. Figures 2B and 2C are illustrations of the depth of penetration of a weld using a weld wire having a non-round cross-section with the axes of the wire oriented differently.
Figure 3 is a perspective view of the end assembly in accordance with the present invention.
Figure 4 is a cross-sectional view through the end assembly in accordance with the present invention.
Figure 5 is an exploded view of the end assembly.
Figure 6 is a cross-sectional view of the end assembly taken along line 6-6 of Figure 4.
Figure 7 is a cross-sectional view of the end assembly taken along line 7-7 of Figure 4.
Figure 8A is an exploded view of a first alternate embodiment of a diffuser in accordance with the present invention.
Figure 8B is an exploded view of a second alternate embodiment of a diffuser in accordance with the present invention.
Figure 8C is an exploded view of a third alternate embodiment of a diffuser in accordance with the present invention.
Figure 8D is an exploded view of a fourth alternate embodiment of a diffuser in accordance with the present invention.
Figure 8E is an exploded view of a fifth alternate embodiment of a diffuser in accordance with the present invention.

### DETAILED DESCRIPTION

Within this description, the term "non-round" is used to describe welding electrode wire. This term is intended to apply to all cross-sectional shapes which are not round, including but not limited to cross-sections which are; elliptical, flattened, formed with concave or convex sides, formed with a radius of curvature which is not constant around its perimeter, rectangular-including square, or any other cross-sectional shape which cannot be described as circular (defined by a constant radius rotated about a point). The non-round shapes may have one or two axes of symmetry or may have no axis of symmetry in their cross-sections taken normal to a longitudinal axis of the wire. For any of the non-round shapes. However, there is a reference axis which ideally is oriented in a particular orientation relative to the workpiece during a welding operation.

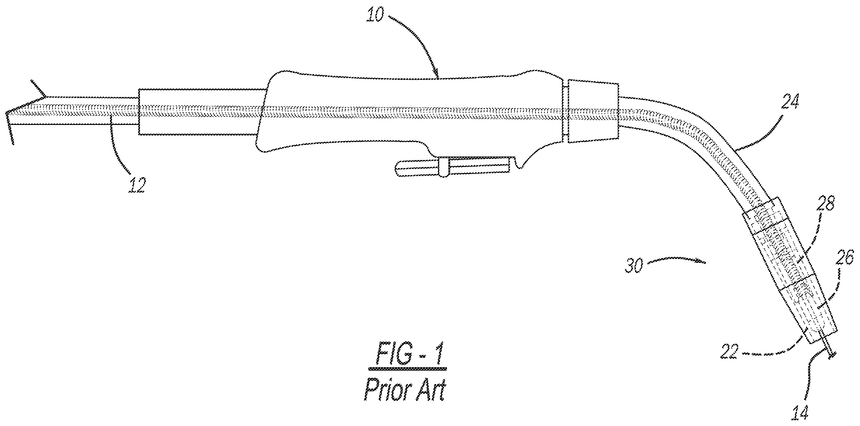

Referring first to Figure 1, a welding torch 10 is shown as an example of a welding system which may incorporate the end assembly 30 in accordance with the present invention. Torch 10 incorporates end assembly 30, having nozzle 22, gooseneck 24, tip 26 and diffuser 28. A flexible coiled wire guide 12 is shown for conducting consumable electrode wire 14. The welding torch 10 shown in Figure 1 can be for use in gas metal arc welding (GMAW) also known as metal inert gas (MIG) welding or metal active gas (MAG) welding and any other types of welding well known in the art. Torch 10 is shown as a handheld device for welding applications. However, many welding systems incorporate robot controlled or guided welding torches, which would have a different configuration than that illustrated using design approaches well known in the prior art. However, end assembly 30 in accordance with the present invention has applications for such robot controlled or other machine guided welding systems.

In one embodiment, welding torch 10 receives a continuous feed, consumable wire electrode 14. The wire electrode or weld wire 14 extends through the central or axial bore 16 of the contact tip 26. Weld wire 14 is axially fed through the contact tip 26 by a conventional wire feeder (not shown). Weld wire 14 contacts and slides against the inner wall of the contact tip 26 during the passage of the weld wire through the contact tip which establishes an electrical conductivity path necessary for transfer of electrical current to the weld wire. In other applications, such as laser welding, electrical contact may not be needed with weld wire 14.

The bore 16 of the contact tip 26 is sized to receive weld wire 14 and to maintain continuous contact between the contact tip 26 and the weld wire while allowing the weld wire 20 to freely pass through the contact tip. In typical embodiments, the size and shape of the bore 16 corresponds to weld wire 14 such that the standard clearances are provided.

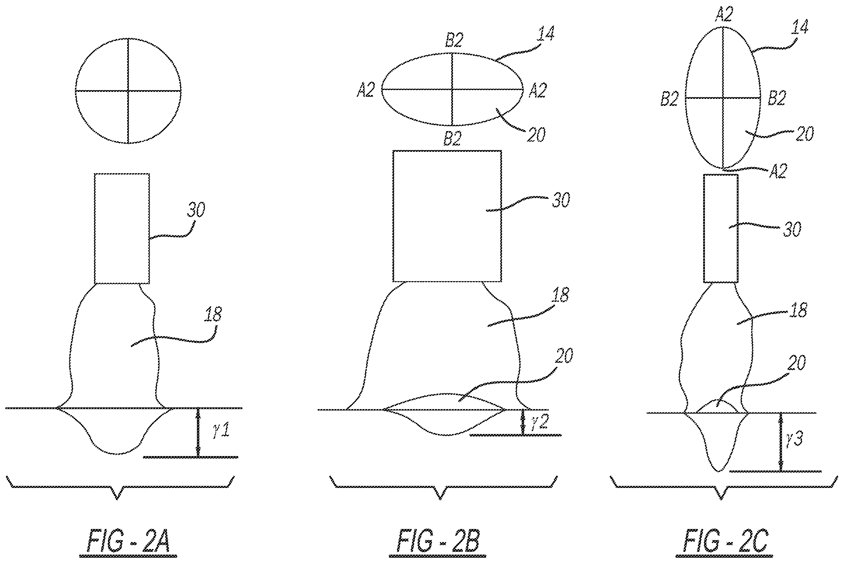

As mentioned previously, a principal feature of the present invention is the ability to orient the cross-sectional axes of consumable electrode wire 14 in a precise manner relative to a workpiece and the direction of weld progression. Examples are provided with reference to Figures 2A, 2B and 2C. Contact tip 26 has bore 16 which can be formed with a variety of cross-sectional shapes to accommodate the configuration of non-round electrode wire 14 being used. The non-round shape enables weld wire 14 to be orientated to accommodate different types of welding needs and to produce different types of weld sizes and weld penetrations as illustrated by Figures 2B and 2C. Figure 2A provides an example of a welding process using conventional prior art round weld wire. For weld wire 14 having a non-round cross-sectional shape, the plasma stream 18 created during welding has a similar elliptical shape. The ability to orientate weld wire 14 allows for better control over the depth of penetration λ2 or λ3 of the weld 20, as shown by Figures 2B and 2C.

When the weld wire 14 is orientated so that the minor axis B2-B2 is essentially aligned with the welding direction (which is into and out of the page as the figures are illustrated), the weld wire 14 having the non-round cross-sectional shape provides a smoother weld bead to weld material transition than with a weld created using a weld wire with a circular cross-sectional shape as shown in Figure 2A. When weld wire 14 is positioned such that the minor axis B2-B2 is essentially aligned in the weld direction as shown by Figure 2B, the plasma stream 18 is broader than as shown in Figure 2A which provides weld 20 having a broader bead margin than with a weld created using a weld wire with a circular cross-sectional shape with depth penetration λ2 which is less than the depth penetration λ1 for a weld created using a weld wire having a circular cross-sectional shape.

When the weld wire 14 is positioned such that the major axis A2-A2 is essentially aligned in the welding direction as shown by Figure 2C, the plasma stream 18 is narrower, which provides a weld 20 having a narrower bead margin than with a weld created using a weld wire with a circular cross-sectional shape as shown in Figure 2A while achieving a depth penetration λ3 which is greater than a depth penetration λ1 of a weld created using a weld wire having a circular cross-sectional shape. The ability to orient weld wire 14 also allows for better control over the size and nature of the heat affected zone (HAZ) of the weld site which allows the thickness or dimension of the HAZ to be better controlled. End assembly 30 in accordance with the present invention allows a precise orientation of the major and minor axes (A2-A2, B2-B2) of the non-round wire 14 relative to the desired weld 20 by establishing the orientation of tip 26 relative to torch 10.

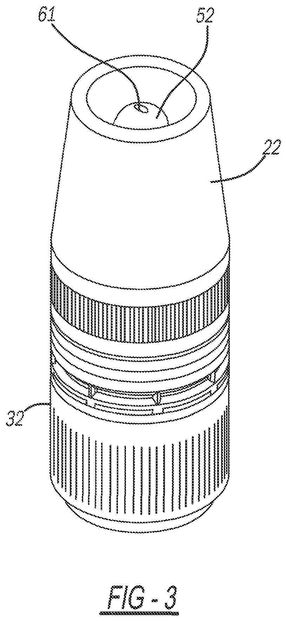

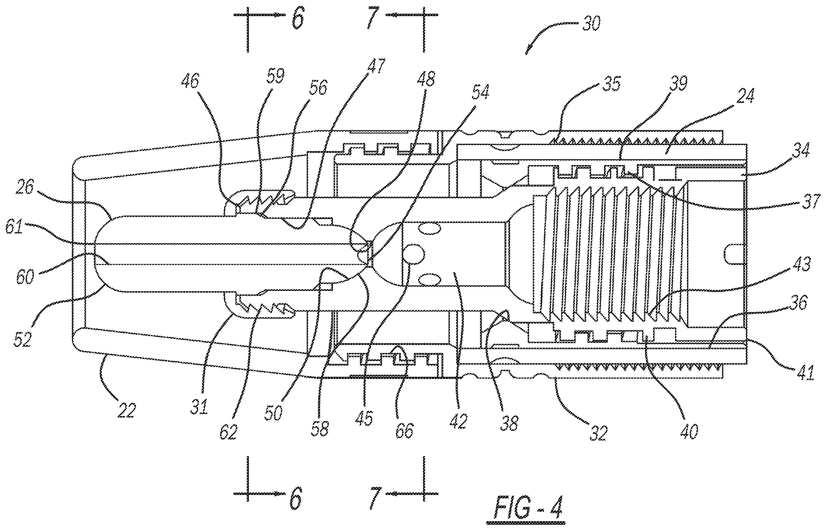

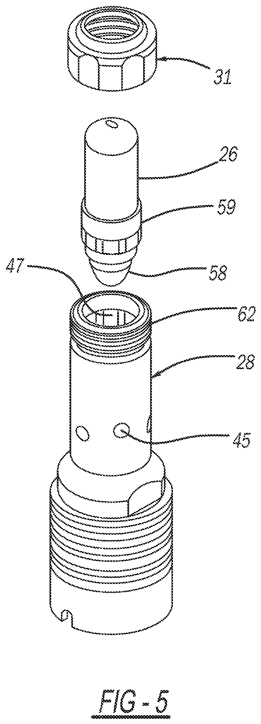

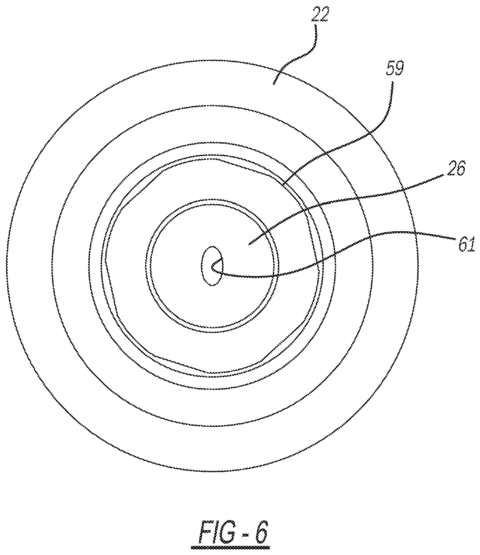

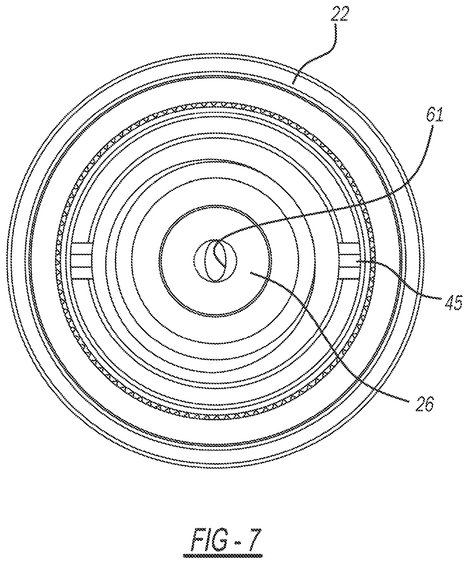

Now referring to Figures 3-7, details of end assembly 30 are described. Principal components of end assembly are; nozzle 22, gooseneck 24, contact tip 26, diffuser 28, nut 31, sleeve 32 and adapter 34. These components are shown assembled in Figures 3 and 4.

Gooseneck 24 is of generally conventional construction, formed of a tube having external threads 35 and internal threads 36. Gooseneck 24 includes conventional components such as wire guide 12 components (shown in Figure 1) for transporting consumable wire electrode 14 through the gooseneck and also provides a pathway for the flow of welding shielding gas.

Adapter 34 forms a sleeve with internal threads 36, external threads 39 and further forms a narrowed central bore 38. Adapter 34 is threaded into the inside of gooseneck 24, meshing threads 36 and 39.

As best shown in Figure 4, diffuser 28 includes external threads 40, which are threaded into and mesh with adapter internal threads 37 to mount the diffuser to adapter 34 in an assembled condition.

One open end 41 of diffuser 28 forms open internal cavity 42 with an entry section forming internal threads 43 adapted for meshing with an end piece for wire guide 12 (not shown) and a narrowed section forming a number of a cross drilled bores 45 for conducting shielding gas. The opposite open end 44 of diffuser 28 exposes an internal cavity having a number of features. Internal surface 47 interacts with features of tip 26 which will be described further below. Central bore 48 provides a pathway for a consumable electrode wire 14. Internal surface 47 terminates in a concave surface 50 centered at central bore 48. Concave surface 50 preferably is shaped as a surface defined by a curved line rotated about the longitudinal centerline of diffuser 28. Surface 50 provides an interaction with a surface of tip 26 consistent with applicants "Powerball^{tm}" connection, which provide an excellent pathway for the conduction of electric current and heat transfer for maintaining cooling of tip 26.

Contact tip 26 features a rounded distal end 52 and a proximal end 54, featuring a convex surface 58 which closely matches and mates with diffuser concave surface 50, again to provide the "Powerball^{tm}" interaction mentioned previously. Contact tip 26 forms shoulder 56 and an external surface 59 having protrusions or other features, such as hexagonal surfaces, splines or other features which mesh with diffuser surface 47. The interaction of surfaces 47 and 59 provide a fixing of the angular orientation of tip 26 relative to diffuser 28 relative to bore 48 and the axis of electrode wire 14. Depending on the shape of the features of the surfaces, a number of discrete angular indexed orientations can be provided. If a high degree of angular position setting is necessary, these features may be small and numerous. For example, if a hexagonal surface interaction is chosen, then six different discrete angular orientations can be provided, each 60° apart. By the use of splines for example, or flattened surfaces greater in number than six, a higher number of discrete positions may be provided. In another arrangement, the indexed orientation provides only one meshing inserted position of tip 26 within diffuser 28, such as provided by a key or flattened surface interaction between tip 26 and diffuser 28. This establishes one desired angular indexed orientation of tip 26, which will position the major and minor axes A2-A3 and B2-B3 of wire 14 in a desired orientation relative to the intended welding operation.

Tip 26 internal bore 60 terminates at distal end 52 with a tip opening 61 which closely conforms to the outer surface dimensions and shape of the non-round electrode wire 14 being used. It is important that opening 61 closely conforms to the cross-sectional shape of wire 14 to provide the necessary electrical conduction pathway between them to enable the welding operation (when used with electrical resistance welding systems). Moreover, this close confirmation establishes the orientation of the wire 28 relative to end assembly 30, and the intended welding operation, a principal feature of the present invention.

Tip 26 is maintained in a mounted condition within diffuser 28 using nut 31. Preferably, nut 31 forms internal Acme or buttress type threads which interact with diffuser threads 62 to provide a high degree of clamping force urging the "Powerball^{™}" surfaces 50 and 58 to interact. Moreover, depending on the configuration of surfaces 47 and 59, nut 30 enables tip 26 to the placed into diffuser 28 in one or a number of angular orientations as desired for establishing the desired orientation of the cross-section of wire 28.

Nozzle 22 forms internal threads 66 which messed with external threads 68 of sleeve 32. Sleeve 32 further forms internal threads 70 which mesh with external threads 35 of gooseneck 24. Figure 4 illustrates the assembled condition of all of the elements. In a welding operation using torch 10, shielding gas conducted by gooseneck 24 flows into cavity 42 and escapes through cross drilled bores 45. From there, the gas flows through the annular space provided around diffuser 28 and nozzle 22, and finally to the distal end of the nozzle where it is oriented to provide shielding gas for the weld puddle formed during a welding operation.

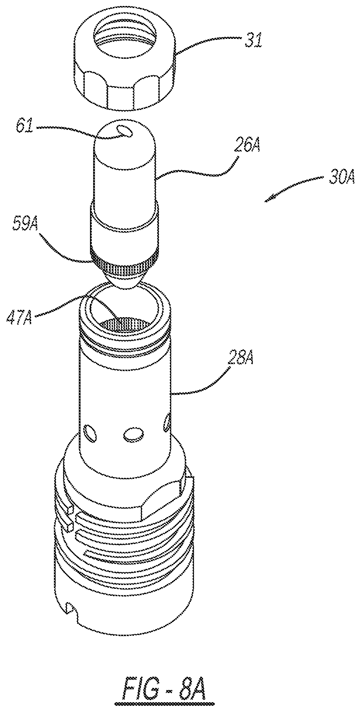

Now with reference to Figures 8A-8F, additional embodiments of end assembly 30 in accordance with the present invention are illustrated, each providing the precise indexing features described previously.

Figure 8A illustrates end assembly 30A having features consistent with the prior embodiment described above but providing a different indexing feature. In this case external surface 59A of tip 26A is in the form of splines and internal surface 47A of diffuser 28A is formed to have internal splines which mesh with surface 59A. This configuration provides a greater number of discrete angular positions can be set between tip 26A and diffuser 28A as the tip is placed into an assembled condition with the diffuser and nut 31 is tightened. The number of discrete angular positions is determined by the angular separation of individual splines formed by surfaces 47A and 59A.

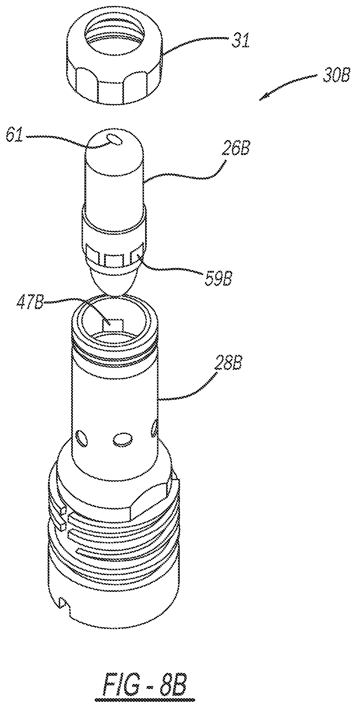

Figure 8B illustrates end assembly 30B having features consistent with the prior described first embodiment but providing a different indexing feature. In this case external surface 59B of tip 26B is in the form of a hexagonal surface and internal surface 47B of diffuser 28B is formed to have a single flattened region or inward directed protrusion which meshes with the one of the flats of hexagonal surface 59B. This configuration provides six discrete angular positions between tip 26B and diffuser 28B as the tip is placed into an assembled condition with the diffuser and nut 31 is tightened. Different polygonal shapes can be provided for surface 59B, depending on the number of discrete positions desired. Moreover, external surface 59B could be provided, having only a single flattened surface. This configuration enables one discrete angular position to be set, a configuration which may be desired in some applications.

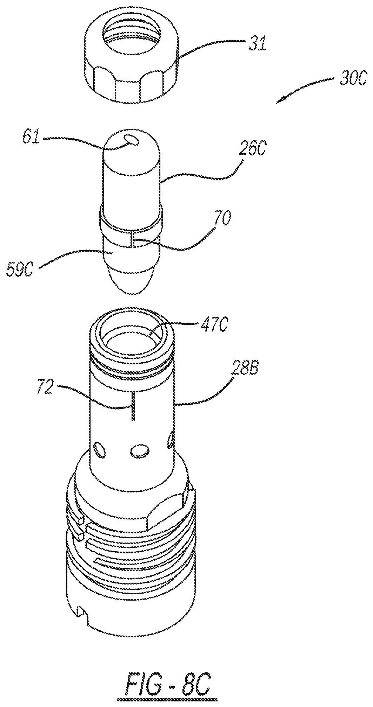

Figure 8C illustrates end assembly 30C having features consistent with the first described embodiment but providing a different indexing feature. In this case external surface 59C, of tip 26C is a smooth tapered shoulder and internal surface 47C of diffuser 28C is also formed to have a smooth taper or conical shoulder, which mates with surface 59C. This configuration provides an infinite number of discrete angular positions between tip 26C and diffuser 28C as the tip is placed into an assembled condition with the diffuser and nut 31 is tightened.

This configuration of end assembly 30C like other embodiments described herein could incorporate indexing marks on tip 26C and diffuser 28C to provide accurate setting of the angular orientation desired. For example, simple indexing marks 70 and 72 are illustrated in Figure 8C, which are keyed to the angular orientation of tip opening 61 and, when using a generally elliptical tip opening shape, the orientation of its major and minor axes A2-A2, and B2-B2. Such indexing marks 70 and 72 could be provided for any of the alternate embodiments described herein. Moreover, the indexing marks 70 and 72 could be embodied as an angular scale running around the perimeter of one the surfaces of tip 26C and diffuser 28C. Indexing marks 70 and 72 would likely be rendered unusable after use of end assembly 30, and any of the other described embodiments after use due to weld splatter. Indexing marks 70 and 72 could be replaced by more prominent features such as notches, protrusions, indentations, etc. indicating angular orientation which may be more survivable in the intended operating environment.

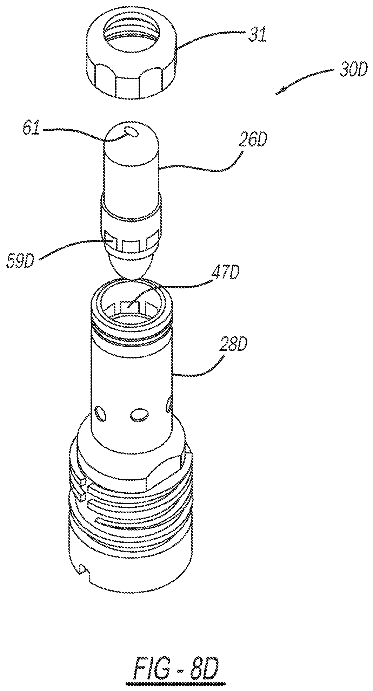

Figure 8D illustrates end assembly 30D having features consistent with the first described embodiment but providing a different indexing feature. In this case external surface 59D of tip 26D is in the form of a hexagonal surface and internal surface 47D of diffuser 28D is formed to have a complementary internal hexagonal surface which mesh with surface 59D. This configuration provides a six discrete angular positions between tip 26D and diffuser 28D as the tip is placed into an assembled condition with the diffuser and nut 31 (or other fastener) is tightened.

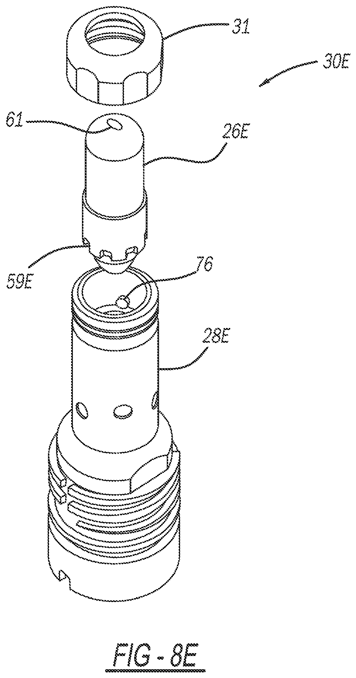

Figure 8E illustrates end assembly 30E having features consistent with the first described embodiment but providing a further different indexing feature. In this case, external surface 59E of tip 26E is in the form of downward opening scallops which could be described as an inversed castellated surface. Diffuser 28E, features and internal projecting pin 76, or other inward protrusion which meshes with one of the scallops of tip 26E when the parts are assembled. This configuration provides a number of discrete angular positions between tip 26E and diffuser 28E equal to the angular separation of individual downward projecting scallops as the tip 26E is placed into an assembled condition with the diffuser 28E and nut 31 is tightened.

While the above description constitutes the preferred embodiments of the present invention, it will be appreciated that the invention is susceptible to modification, variation and change without departing from the scope of the present invention as defined in the appended claims.

## Claims

1. An end assembly (30) for a welding device for use with a consumable electrode (14) having a non-round cross-sectional shape and defining at least one reference cross-sectional axis, comprising
a diffuser (28) comprising a narrowed section forming a number of a cross drilled bores (45) for conducting shielding gas, an opposite open end (44) exposing an internal cavity, and a distal end,
**characterised in that** the internal cavity and the distal end are forming a diffuser indexing surface,
and **in that** the tip (26) has a tip indexing surface engageable with the diffuser indexing surface, the tip (26) further having a central bore (60) for conducting the consumable electrode (14) and a tip opening (61) having a non-round shape closely conforming with the cross-sectional shape of the consumable electrode (14), the tip (26) adapted to assemble with the diffuser (28) with the tip and diffuser indexing surfaces interacting to provide at least one indexed angular orientation between the diffuser (28) and the tip (26) whereby the orientation of the reference cross-sectional axis of the consumable electrode (14) is established in a predetermined manner relative to the diffuser (28), and
a fastener for clamping the tip (26) and the diffuser (28) together.

2. A welding device for use with a consumable electrode (14) having a non-round cross-sectional shape comprising the end assembly (30) in accordance with claim 1, wherein the welding device is in the form of an electrical resistance welding torch.

3. The end assembly (30) in accordance with claim 1, wherein the fastener is in the form of a nut (31) threaded onto the diffuser (28).

4. The end assembly (30) in accordance with claim 1, wherein the diffuser indexing surface comprises the internal cavity and is further formed as an internal indexing surface (47), and the tip indexing surface is formed by an external indexing surface (59).

5. The end assembly (30) in accordance with claim 4, wherein the internal indexing surface (47) and the external indexing surface (59) extend respectively along the longitudinal axes of the diffuser (28) and the tip (26) whereby the tip (26) may be inserted into the diffuser (28) along the longitudinal axis of the diffuser (28).

6. The end assembly (30) in accordance with claim 1, wherein the diffuser internal cavity having an end concave surface (50) and the tip (26) forming an end convex surface (58) whereby when the tip (26) is assembled into the diffuser (28), the end concave surface (50) and the end convex surface are (58) brought into mating contact.

7. The end assembly (30) in accordance with claim 1, wherein the non-round shape is one of; elliptical, flattened, formed with concave or convex sides, formed with a radius of curvature which is not constant around a perimeter, rectangular, square, or a cross-sectional shape which is not circular.

8. The end assembly (30) in accordance with claim 4, wherein the internal indexing surface (47) and the external indexing surfaces (59) are each formed in a hexagonal shape elongated along the longitudinal axes of the diffuser (28) and the tip (26), the hexagonal shapes of the internal indexing surface (47) and the external indexing surface (59) configured to mate together, the hexagonal shapes allowing the tip (26) to be inserted into engagement with the diffuser (28) in any one of six indexed positions.

9. The end assembly (30) in accordance with claim 4, wherein the internal indexing surface (47) and the external indexing surface (59) are each formed having a splined configuration, the splined configurations of the internal indexing surface (47) and the external indexing surface (59) configured to mate together, and allowing the tip (26) to be inserted into engagement with the diffuser (28) in any one of a multiplicity of indexed positions.

10. The end assembly (30) in accordance with claim 4, wherein the internal indexing surface (47) formed having a single inwardly protruding surface and the external indexing surface (59) formed to have a multiplicity of equally angularly spaced depressions each engageable with the inwardly protruding surface, allowing the tip (26) to be engageable with the diffuser (28) in any one of a multiplicity of indexed positions.

11. The end assembly (30) in accordance with claim 4, wherein the internal indexing surface (47) formed having a multiplicity of inwardly protruding surfaces and the external indexing surface (59) formed to have a multiplicity of equally angularly spaced depressions each engageable with the inwardly protruding surfaces, the inwardly protruding surfaces of the internal indexing surface (47) and the external indexing (59) surfaces configured to mate together, allowing the tip (26) to be engageable with the diffuser (28) in any one of a multiplicity of indexed positions.

12. The end assembly (30) in accordance with claim 3, wherein the internal indexing surface (47) formed as a tapered surface, and the external indexing surface (59) formed as a conical shoulder, the tapered bore and conical shoulder enabling the tip (26) to be engageable with the diffuser (28) in any one of a multiplicity of indexed positions.

13. The end assembly (30) in accordance with claim 4, wherein the internal indexing surface (47) formed as an inwardly protruding pin and the external indexing surface (59) formed as a plurality of downwardly opening notches each engageable with the pin.

14. The end assembly (30) in accordance with claim 4, wherein the tip (26) and the diffuser (28) forming at least one indicia indicating an angular orientation between tip (26) and the diffuser (28).

## Patentansprüche

1. Eine Endanordnung (30) für eine Schweißvorrichtung zur Verwendung mit einer Verbrauchselektrode (14), die eine nicht-runde Querschnittsform aufweist und mindestens eine Referenz-Querschnittsachse definiert, umfassend
einen Diffusor (28), umfassend einen verengten Abschnitt, der eine Anzahl von querbohrten Bohrungen (45) zur Führung von Schutzgas bildet, ein gegenüberliegendes offenes Ende (44), das einen inneren Hohlraum freilegt, und ein distales Ende,
**dadurch gekennzeichnet, dass** der innere Hohlraum und das distale Ende eine Diffusor-Indexierungsfläche bilden, und dass die Spitze (26) eine Spitzen-Indexierungsfläche aufweist, die mit der Diffusor-Indexierungsfläche in Eingriff bringbar ist, wobei die Spitze (26) ferner eine zentrale Bohrung (60) zur Führung der Verbrauchselektrode (14) und eine Spitzenöffnung (61) mit einer nicht-runden Form aufweist, die eng der Querschnittsform der Verbrauchselektrode (14) entspricht, wobei die Spitze (26) dazu ausgelegt ist, mit dem Diffusor (28) zusammengebaut zu werden, wobei die Spitzen- und Diffusor-Indexierungsflächen zusammenwirken, um mindestens eine indexierte Winkelausrichtung zwischen dem Diffusor (28) und der Spitze (26) bereitzustellen, wodurch die Ausrichtung der Referenz-Querschnittsachse der Verbrauchselektrode (14) in einer vorbestimmten Weise relativ zum Diffusor (28) festgelegt wird, und
ein Befestigungselement zum Zusammenklemmen der Spitze (26) und des Diffusors (28).

2. Eine Schweißvorrichtung zur Verwendung mit einer Verbrauchselektrode (14), die eine nicht-runde Querschnittsform aufweist, umfassend die Endanordnung (30) nach Anspruch 1, wobei die Schweißvorrichtung in Form eines elektrischen Widerstandsschweißbrenners vorliegt.

3. Die Endanordnung (30) nach Anspruch 1, wobei das Befestigungselement in Form einer Mutter (31) vorliegt, die auf den Diffusor (28) aufgeschraubt ist.

4. Die Endanordnung (30) nach Anspruch 1, wobei die Diffusor-Indexierungsfläche den inneren Hohlraum umfasst und ferner als innere Indexierungsfläche (47) ausgebildet ist, und die Spitzen-Indexierungsfläche durch eine äußere Indexierungsfläche (59) gebildet wird.

5. Die Endanordnung (30) nach Anspruch 4, wobei sich die innere Indexierungsfläche (47) und die äußere Indexierungsfläche (59) jeweils entlang der Längsachsen des Diffusors (28) und der Spitze (26) erstrecken, wodurch die Spitze (26) entlang der Längsachse des Diffusors (28) in den Diffusor (28) eingeführt werden kann.

6. Die Endanordnung (30) nach Anspruch 1, wobei der innere Hohlraum des Diffusors eine konkave Endfläche (50) aufweist und die Spitze (26) eine konvexe Endfläche (58) bildet, wodurch, wenn die Spitze (26) in den Diffusor (28) eingebaut wird, die konkave Endfläche (50) und die konvexe Endfläche (58) in passenden Kontakt gebracht werden.

7. Die Endanordnung (30) nach Anspruch 1, wobei die nicht-runde Form eine der folgenden ist: elliptisch, abgeflacht, mit konkaven oder konvexen Seiten gebildet, mit einem Krümmungsradius gebildet, der um einen Umfang nicht konstant ist, rechteckig, quadratisch oder eine Querschnittsform, die nicht kreisförmig ist.

8. Die Endanordnung (30) nach Anspruch 4, wobei die innere Indexierungsfläche (47) und die äußeren Indexierungsflächen (59) jeweils in einer sechseckigen Form ausgebildet sind, die entlang der Längsachsen des Diffusors (28) und der Spitze (26) verlängert ist, wobei die sechseckigen Formen der inneren Indexierungsfläche (47) und der äußeren Indexierungsfläche (59) so konfiguriert sind, dass sie zusammenpassen, wobei die sechseckigen Formen es ermöglichen, dass die Spitze (26) in einer von sechs indexierten Positionen in Eingriff mit dem Diffusor (28) eingeführt werden kann.

9. Die Endanordnung (30) nach Anspruch 4, wobei die innere Indexierungsfläche (47) und die äußere Indexierungsfläche (59) jeweils mit einer Keilwellenkonfiguration ausgebildet sind, wobei die Keilwellenkonfigurationen der inneren Indexierungsfläche (47) und der äußeren Indexierungsfläche (59) so konfiguriert sind, dass sie zusammenpassen, und es ermöglichen, dass die Spitze (26) in einer von einer Vielzahl von indexierten Positionen in Eingriff mit dem Diffusor (28) eingeführt werden kann.

10. Die Endanordnung (30) nach Anspruch 4, wobei die innere Indexierungsfläche (47) mit einer einzigen nach innen vorstehenden Fläche ausgebildet ist und die äußere Indexierungsfläche (59) so ausgebildet ist, dass sie eine Vielzahl von gleichmäßig winkelig beabstandeten Vertiefungen aufweist, die jeweils mit der nach innen vorstehenden Fläche in Eingriff bringbar sind, wodurch die Spitze (26) in einer von einer Vielzahl von indexierten Positionen mit dem Diffusor (28) in Eingriff bringbar ist.

11. Die Endanordnung (30) nach Anspruch 4, wobei die innere Indexierungsfläche (47) mit einer Vielzahl von nach innen vorstehenden Flächen ausgebildet ist und die äußere Indexierungsfläche (59) so ausgebildet ist, dass sie eine Vielzahl von gleichmäßig winkelig beabstandeten Vertiefungen aufweist, die jeweils mit den nach innen vorstehenden Flächen in Eingriff bringbar sind, wobei die nach innen vorstehenden Flächen der inneren Indexierungsfläche (47) und die äußeren Indexierungsflächen (59) so konfiguriert sind, dass sie zusammenpassen, wodurch die Spitze (26) in einer von einer Vielzahl von indexierten Positionen mit dem Diffusor (28) in Eingriff bringbar ist.

12. Die Endanordnung (30) nach Anspruch 3, wobei die innere Indexierungsfläche (47) als konische Fläche ausgebildet ist und die äußere Indexierungsfläche (59) als konische Schulter ausgebildet ist, wobei die konische Bohrung und die konische Schulter es ermöglichen, dass die Spitze (26) in einer von einer Vielzahl von indexierten Positionen mit dem Diffusor (28) in Eingriff bringbar ist.

13. Die Endanordnung (30) nach Anspruch 4, wobei die innere Indexierungsfläche (47) als nach innen vorstehender Stift ausgebildet ist und die äußere Indexierungsfläche (59) als eine Vielzahl von nach unten öffnenden Kerben ausgebildet ist, die jeweils mit dem Stift in Eingriff bringbar sind.

14. Die Endanordnung (30) nach Anspruch 4, wobei die Spitze (26) und der Diffusor (28) mindestens eine Markierung bilden, die eine Winkelausrichtung zwischen der Spitze (26) und dem Diffusor (28) anzeigt.

## Revendications

1. Un ensemble d'extrémité (30) pour un dispositif de soudage destiné à être utilisé avec une électrode consommable (14) ayant une forme de section transversale non ronde et définissant au moins un axe de section transversale de référence, comprenant
un diffuseur (28) comprenant une section rétrécie formant un certain nombre de perçages transversaux (45) pour conduire le gaz de protection, une extrémité ouverte opposée (44) exposant une cavité interne, et une extrémité distale,
**caractérisé en ce que** la cavité interne et l'extrémité distale forment une surface d'indexation de diffuseur, et **en ce que** la pointe (26) a une surface d'indexation de pointe pouvant s'engager avec la surface d'indexation de diffuseur, la pointe (26) ayant en outre un alésage central (60) pour conduire l'électrode consommable (14) et une ouverture de pointe (61) ayant une forme non ronde se conformant étroitement à la forme de section transversale de l'électrode consommable (14), la pointe (26) étant adaptée pour s'assembler avec le diffuseur (28) avec les surfaces d'indexation de pointe et de diffuseur interagissant pour fournir au moins une orientation angulaire indexée entre le diffuseur (28) et la pointe (26) par laquelle l'orientation de l'axe de section transversale de référence de l'électrode consommable (14) est établie de manière prédéterminée par rapport au diffuseur (28), et
un élément de fixation pour serrer ensemble la pointe (26) et le diffuseur (28).

2. Un dispositif de soudage destiné à être utilisé avec une électrode consommable (14) ayant une forme de section transversale non ronde comprenant l'ensemble d'extrémité (30) selon la revendication 1, dans lequel le dispositif de soudage est sous la forme d'une torche de soudage par résistance électrique.

3. L'ensemble d'extrémité (30) selon la revendication 1, dans lequel l'élément de fixation est sous la forme d'un écrou (31) vissé sur le diffuseur (28).

4. L'ensemble d'extrémité (30) selon la revendication 1, dans lequel la surface d'indexation de diffuseur comprend la cavité interne et est en outre formée comme une surface d'indexation interne (47), et la surface d'indexation de pointe est formée par une surface d'indexation externe (59).

5. L'ensemble d'extrémité (30) selon la revendication 4, dans lequel la surface d'indexation interne (47) et la surface d'indexation externe (59) s'étendent respectivement le long des axes longitudinaux du diffuseur (28) et de la pointe (26) par laquelle la pointe (26) peut être insérée dans le diffuseur (28) le long de l'axe longitudinal du diffuseur (28).

6. L'ensemble d'extrémité (30) selon la revendication 1 dans lequel, la cavité interne du diffuseur ayant une surface concave d'extrémité (50) et la pointe (26) formant une surface convexe d'extrémité (58) par laquelle lorsque la pointe (26) est assemblée dans le diffuseur (28), la surface concave d'extrémité (50) et la surface convexe d'extrémité (58) sont amenées en contact d'accouplement.

7. L'ensemble d'extrémité (30) selon la revendication 1, dans lequel la forme non ronde est l'une des suivantes ; elliptique, aplatie, formée avec des côtés concaves ou convexes, formée avec un rayon de courbure qui n'est pas constant autour d'un périmètre, rectangulaire, carrée, ou une forme de section transversale qui n'est pas circulaire.

8. L'ensemble d'extrémité (30) selon la revendication 4, dans lequel la surface d'indexation interne (47) et les surfaces d'indexation externes (59) sont chacune formées en forme hexagonale allongée le long des axes longitudinaux du diffuseur (28) et de la pointe (26), les formes hexagonales de la surface d'indexation interne (47) et de la surface d'indexation externe (59) étant configurées pour s'accoupler ensemble, les formes hexagonales permettant à la pointe (26) d'être insérée en engagement avec le diffuseur (28) dans l'une quelconque de six positions indexées.

9. L'ensemble d'extrémité (30) selon la revendication 4, dans lequel la surface d'indexation interne (47) et la surface d'indexation externe (59) sont chacune formées ayant une configuration cannelée, les configurations cannelées de la surface d'indexation interne (47) et de la surface d'indexation externe (59) étant configurées pour s'accoupler ensemble, et permettant à la pointe (26) d'être insérée en engagement avec le diffuseur (28) dans l'une quelconque d'une multiplicité de positions indexées.

10. L'ensemble d'extrémité (30) selon la revendication 4, dans lequel la surface d'indexation interne (47) est formée ayant une seule surface saillante vers l'intérieur et la surface d'indexation externe (59) est formée pour avoir une multiplicité de dépressions espacées angulairement de manière égale chacune pouvant s'engager avec la surface saillante vers l'intérieur, permettant à la pointe (26) d'être engageable avec le diffuseur (28) dans l'une quelconque d'une multiplicité de positions indexées.

11. L'ensemble d'extrémité (30) selon la revendication 4, dans lequel la surface d'indexation interne (47) est formée ayant une multiplicité de surfaces saillantes vers l'intérieur et la surface d'indexation externe (59) est formée pour avoir une multiplicité de dépressions espacées angulairement de manière égale chacune pouvant s'engager avec les surfaces saillantes vers l'intérieur, les surfaces saillantes vers l'intérieur de la surface d'indexation interne (47) et les surfaces d'indexation externes (59) étant configurées pour s'accoupler ensemble, permettant à la pointe (26) d'être engageable avec le diffuseur (28) dans l'une quelconque d'une multiplicité de positions indexées.

12. L'ensemble d'extrémité (30) selon la revendication 3, dans lequel la surface d'indexation interne (47) est formée comme une surface conique, et la surface d'indexation externe (59) est formée comme un épaulement conique, l'alésage conique et l'épaulement conique permettant à la pointe (26) d'être engageable avec le diffuseur (28) dans l'une quelconque d'une multiplicité de positions indexées.

13. L'ensemble d'extrémité (30) selon la revendication 4, dans lequel la surface d'indexation interne (47) est formée comme une goupille saillante vers l'intérieur et la surface d'indexation externe (59) est formée comme une pluralité d'encoches s'ouvrant vers le bas chacune pouvant s'engager avec la goupille.

14. L'ensemble d'extrémité (30) selon la revendication 4, dans lequel la pointe (26) et le diffuseur (28) forment au moins un indice indiquant une orientation angulaire entre la pointe (26) et le diffuseur (28).
